Europäisches Patentamt

European Patent Office

Office européen des brevets

(11) Publication number: **0 339 458 B1**

## EUROPEAN PATENT SPECIFICATION

(45) Date of publication of patent specification: **15.06.94**

(51) Int. Cl.⁵: **G01J 5/60**, G01J 5/02, G01J 5/04

(21) Application number: **89107019.5**

(22) Date of filing: **19.04.89**

(54) **Method and apparatus for sensing the temperature of a remote object.**

(30) Priority: **27.04.88 US 186556**

(43) Date of publication of application:
**02.11.89 Bulletin 89/44**

(45) Publication of the grant of the patent:
**15.06.94 Bulletin 94/24**

(84) Designated Contracting States:
**AT BE CH DE ES FR GB GR IT LI LU NL SE**

(56) References cited:
**GB-A- 2 082 767**

**PATENT ABSTRACTS OF JAPAN, vol. 10, no. 132 (P-456)[2189], 16th May 1986; & JP-A-60 253 939**

**PATENT ABSTRACTS OF JAPAN, vol. 6, no. 265 (P-165)[1143], 24th December 1982; & JP-A-57 160 029**

**PATENT ABSTRACTS OF JAPAN, vol. 9, no. 292 (P-406)[2015], 19th November 1985; & JP-A-60 131 430**

(73) Proprietor: **AG Processing Technologies, Inc.**
**1325 Borregas Avenue**
**Sunnyvale California 94089(US)**

(72) Inventor: **Thompson, Thomas E.**
**446 Los Altos Avenue**
**Los Altos California 94022(US)**
Inventor: **Westerberg, Eugene R.**
**2718 Greer Road**
**Palo Alto California 94303(US)**

(74) Representative: **Liesegang, Roland, Dr.-Ing. et al**
**FORRESTER & BOEHMERT**
**Franz-Joseph-Strasse 38**
**D-80801 München (DE)**

## Description

The invention relates to a method and an apparatus for sensing the temperature of a remote object within a chamber according to the preamble of claims 1 and 7, respectively.

An apparatus of this kind is shown in the JP-A-60 253 939 as comprising a heating chamber having a boundary wall of a material that transmits radiation within a selected waveband; a radition detector which is disposed external to said chamber; a window of radiation transmissive material which is disposed in the boundary wall and heating means disposed about that chamber for radiantly heating the remote object.

Further, a similar method and apparatus are disclosed in the US-A-4 854 727, published on August 8, 1989.

Radiation thermometry is a technique which allows the measurement of the temperature of a remote object by analyzing the radiation emitted by the object. All objects at temperatures greater than 0 kelvin emit radiation which can be measured to determine the temperature of the object. The concept of radiation thermometry is based upon the underlying principles that as an object which has a certain emissivity heats up, it emits radiation that shifts in wavelength and increases in intensity such that an object which radiates with an orange glow is hotter than an otherwise identical object which radiates with a red glow. Details of radiation thermometry are discussed in the literature (See, for example, Tenney; Mechanical Engineering, Oct. '86; "Red Hot ... AND HOTTER", pp. 36-41.)

In the case of an object inside a furnace or other environment of elevated ambient temperature, it is not easy to optically detect the radiation from the object alone. Radiation from hot elements present in the environment will be reflected to some degree by the object being detected. Thus, where the object is reflecting significant amounts of unabsorbed radiation, simple optical detection apparatus will indicate a temperature which is higher than the true temperature of the object alone.

The invention provides a method and an apparatus for sensing the temperature of a remote object within a chamber comprising the features of claims 1 and 7, respectively.

In accordance with the present invention, dual pyrometer detectors and method measure the temperature of a remote heated object such as semiconductor wafer in the presence of ambient radiation within a processing chamber. More specifically, the present invention uses a contactless method to accurately determines the temperature of a remote object within the surrounding environment which includes ambient radiation from a heating source and a hot quartz isolation tube that surrounds the remote object. For example, when quickly heating an object in a furnace, the true temperature of the object may be substantially lower than the surrounding temperature inside the furnace. This problem is further complicated when a hot quartz isolation barrier is positioned around the object, and is further complicated when the temperature of the object is below 700° C.

In accordance with the illustrated embodiment of the present invention, one detector measures emitted radiation from both the remote object and from the environment, and the other detector measures radiation substantially only from the environment. The appropriate difference between the outputs of these two detectors yields the detected radiation from the remote object alone and thus final signal can then be used to determine the temperature of the remote object.

## Brief Description of the Drawings

Figure 1 is a pictorial section view of one implementation of the preferred embodiment of the invention;

Figure 2 is a pictorial schematic diagram of the operating circuitry of the present invention;

Figure 3 is a graph illustrating the transmission characteristics of quartz at two different thicknesses and temperatures as a function of the radiation wavelength;

Figure 4 is a graph illustrating representative radiation intensities from three different emitting elements in an implementation of the preferred embodiment, namely, the tungsten-halogen lamps, a silicon wafer, and the quartz chamber;

Figure 5 is a graph illustrating the radiant energy incident upon a pyrometer assembly at about 4.5 microns wavelength as a function of the temperature of radiating elements; and

Figures 6(a) and (b) are graphs of output signal levels from the two detectors of the present invention.

## Description of Preferred Embodiment

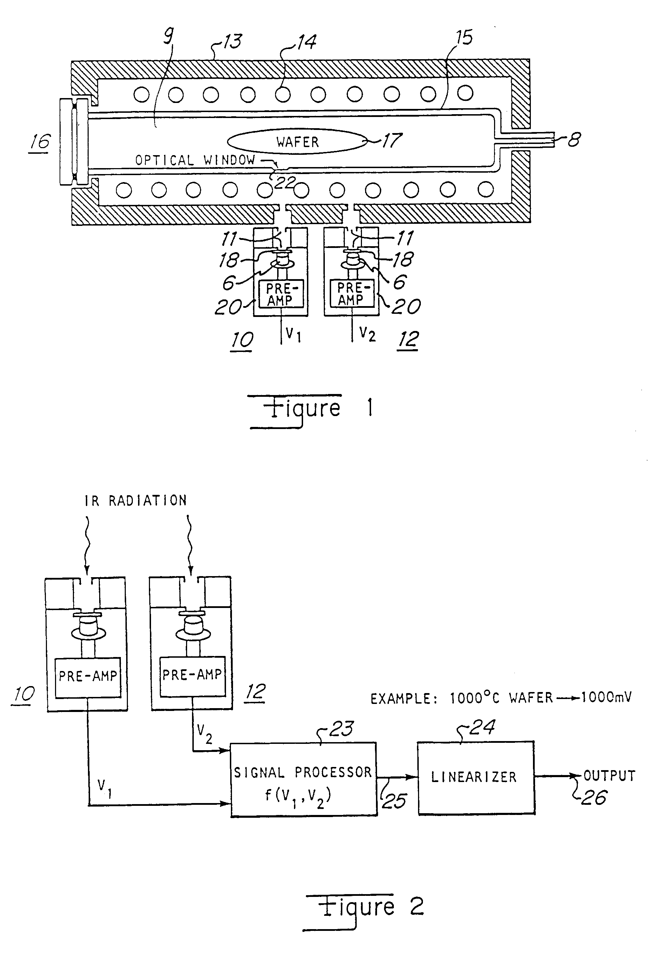

Referring now to Figure 1, the illustrated preferred embodiment of the present invention includes two pyrometer assemblies 10 and 12 positioned near the furnace chamber 13. The furnace chamber 13 is gold-plated internally to reflect the radiation of the tungsten-halogen lamps 14 which are arranged as the heating elements for the semiconductor wafer 17. The wafer 17 is isolated from the atmospheric environment by an isolation tube 15, which may be formed in whole or in part from radiation-transmissive materials such as quartz or sapphire.

Typically, the isolation tube 15 is formed of quartz about 3 mm thick. The wafer 17 is supported within the isolation tube 15 by pins (not shown) that may also be formed of such radiation-transmissive materials. The lamps 14 are positioned between the interior of the furnace chamber 13 and the isolation tube 15. At one end of the isolation tube 15 is a sealable hatch 16 which can be opened to remove or insert a wafer 17 or other object into the isolation tube 15, and appropriate inert or reactive gases may be introduced into the isolation tube 15 through port 8 during processing of the wafer 17.

The pyrometer assemblies 10 and 12 include infrared detectors 6, optical-path slits 11 positioned to geometrically limit the radiation that strikes the detector 6, and radiation pass-band-filters 18 that limit the band of infrared radiation that strikes the detectors. These detectors 6 may include thermopiles, each including a plurality of thermo couples, that respond to the incident radiation to produce representative electrical signals in known manner. The detectors 6 are thus disposed to respond to radiation within the band and within the immediate field of view or "view area" through the apertures or slits 11 in the housing 20.

One of the pyrometer assemblies 10 is positioned to sense radiation that passes through the optical window 22 in the isolation tube 15. Typically, this window is made of quartz of about .15 mm thickness. The second pyrometer assembly 12 is positioned to sense radiation from the isolation tube 15 at a different location with no optical window in its field of view.

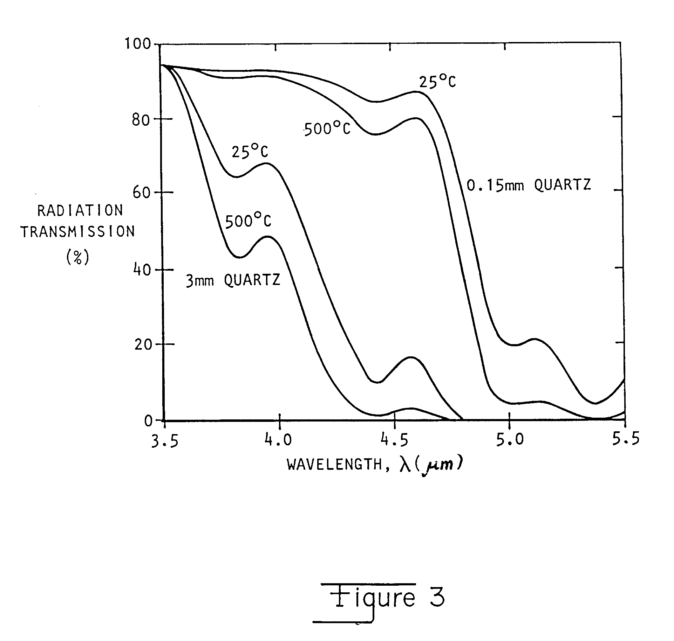

One of the principles of the present invention may be understood from an analysis of the transmission characteristics of the isolation tube material which allow differentiation between the radiation signals incident upon the two pyrometer assemblies 10 and 12. Typical transmission characteristics of the isolation tube and optical window 22 are illustrated in the graph of Figure 3 for the isolation tube made of 3 mm quartz and the window made of 0.15 mm quartz. It can be seen that 3 mm quartz effectively attenuates radiation having wavelengths greater than 4.3 $\mu$m, whereas 0.15 mm quartz (in the optical window 22) has an equivalent attenuation only for wavelengths greater than 4.9 $\mu$m. For sapphire windows, the transmissivity as a function of wavelength of the transmitted radiation over substantially the same temperature range remains higher than for quartz out to longer wavelengths (not shown). By choosing band pass filters 18 that pass radiation between 4.3 and 4.7 $\mu$m, the first pyrometer assembly 10 senses radiation from the hot wafer that passes through the optical window 22 as well as radiation from the chamber environment, including the lamps 14 and the hot quartz of the isolation tube 15. The second pyrometer assembly 12 located in alignment with the hot wafer thus senses mainly radiation from the chamber environment, including the lamps 14 and the hot quartz of the isolation tube 15.

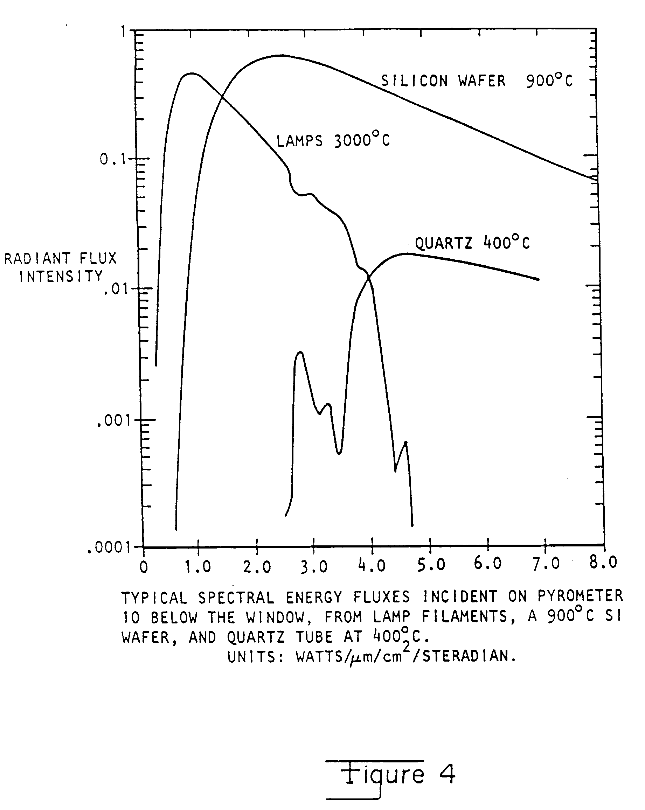

Figure 4 illustrates typical spectral energy fluxes that are incident on the pyrometer assembly 10 below the window 22 from the three main sources of radiation. In this illustrated embodiment of the present invention, those main sources of radiation include the tungsten filaments of the tungsten-halogen lamps 14 at about 3000°C, the silicon wafer 17 at about 900°C, and the quartz isolation tube 15 at about 400°C. It should be noted that the quartz does not radiate significantly until it becomes opaque (above about 3.5 $\mu$m), and that the quartz radiation does not come solely from the window area. It should also be noted that when the quartz isolation tube 15 becomes opaque, a considerable amount of the lamp radiation is blocked by the quartz of the isolation tube 15.

Referring again to Figure 3, quartz is shown as transmitting radiation at wavelengths less than 4.0 $\mu$m through two different thicknesses, namely, 0.15 millimeters and 3.0 millimeters. Since the tungsten-halogen lamps 14 radiate predominantly at an approximate wavelength of about 1.0 $\mu$m at the operating temperature of about 3000°C, the quartz of the isolation tube 15 readily transmits the radiant energy from the lamps to the wafer 17 which then heats up.

As indicated in Figure 4, the radiated lamp energy that arrives at the pyrometer assemblies is predominantly at wavelengths less than about 4.0 $\mu$m. Thus, the filters 18 associated with the pyrometer assemblies 10 and 12 essentially eliminate responsiveness of the detectors 6 to radiation from the lamps 14 and enhance the responsiveness thereof to radiation from the silicon wafer at the various temperatures thereof.

The combination of 4.3 to 4.7 $\mu$m band-pass filters 18 and the window 22 in the quartz isolation tube 15 enables the two pyrometer assemblies 10 and 12 to respond to radiation from distinctive, composite sources, i.e. to the radiation from the chamber environment alone and to the radiation from the chamber environment and wafer combined. Therefore, the radiation emitted by the wafer 17 alone can now be isolated to provide an accurate indication of its true temperature within the hot chamber environment.

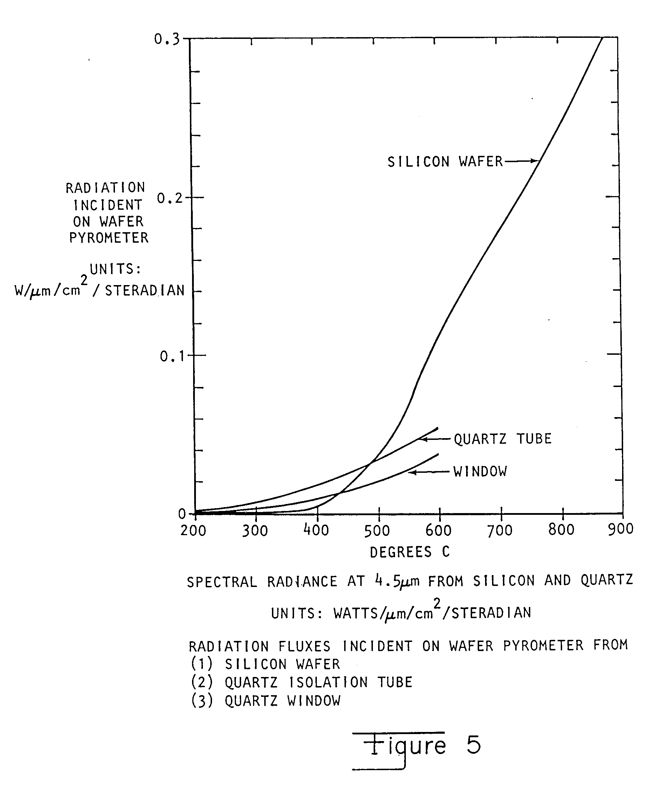

Figure 5 indicates the temperature dependence of the radiation fluxes on the pyrometer assembly 10 from three main sources of radiation in the 4.3 to 4.7 $\mu$m wave band in one embodiment of the invention.

Referring now to Figure 2, the output signals generated by the pyrometer assemblies 10 and 12 are applied to electronic signal processing circuitry that produces an output voltage which is a true indication of the radiation from the object. In the present embodiment, this signal processing circuitry includes a differential amplifier 23 the output of which is applied to a linearizer circuit 24. The signal processor 23 may include a differential amplifier which subtracts a selected multiple, A, of the voltage $V_2$ generated by pyrometer assembly 12 from the voltage $V_1$ generated by pyrometer assembly 10, to provide a voltage 25 indicative of the true temperature of the wafer 17 alone. The linearizer circuit 24 includes conventional circuitry which produces an output signal 26 that is linearly proportional to the true wafer temperature.

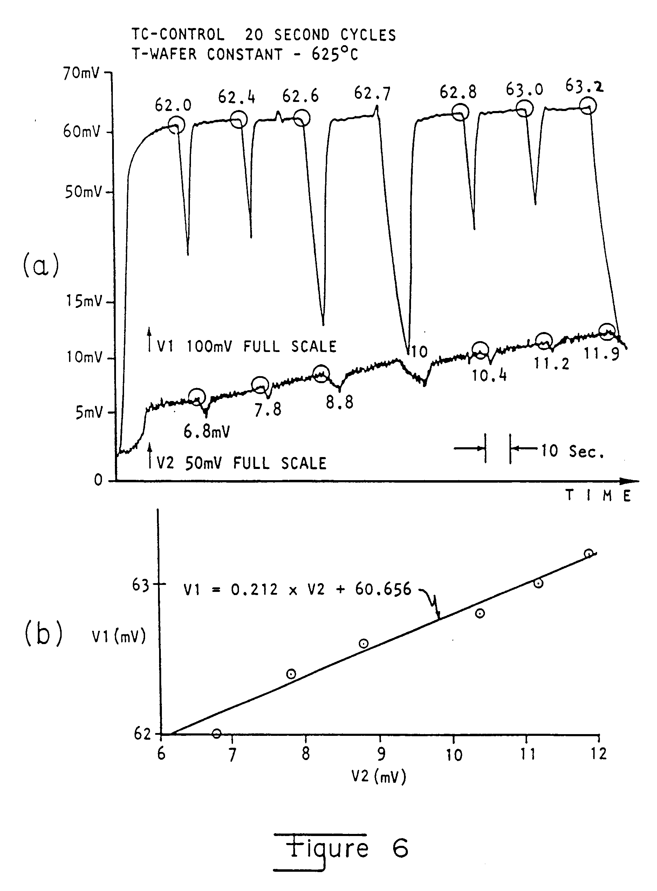

The multiple, A, may be determined experimentally, for example as illustrated in the graphs of Figure 6(a) and (b), from the functional correlation of the incremental variation of $V_1$ from pyrometer assembly 10 with $V_2$ from the pyrometer assembly 12 as the isolation tube 15 and wafer 17 are heated up in successive heating cycles over time. In addition, the emissivity of the wafer 17 may vary with the diverse surface coatings on the wafer. Thus, the multiple, A, depends upon the surface characteristics of the particular wafer 17 and upon the temperatures of the wafer 17 and isolation tube 15 through which the heating process takes place. The multiple, A, may thus be determined by characterizing the portion or percentage variations in the signal $V_1$, attributable to variations in the signal $V_2$, as illustrated in Figure 6(b):

$$V_1 = A * V_2 + B$$

In one embodiment of the invention for a sample wafer 17 of given surface properties operating at about 625°C (as measured accurately by contact thermometry apparatus of conventional design, A is determined to be approximately 21%. The signal processor 23 thus produces an output signal 25 representative of the temperature of the wafer 17 with a certain radiation emissivity. The correlation between this output signal (optically determined) and the true wafer temperature may thus be determined in accordance with one embodiment using a sample wafer 17 mounted in close thermal contact with a thermally-responsive element such as a thermocouple that is calibrated in actual temperature. One such correlation technique is described, for example, in the aforementioned US-A-4 854 727. The correlation between actual wafer temperature and the optically measured temperature of the wafer 17 can then be used for thereafter optically measuring the temperature of the rest of a population of wafers having identical surface characteristics in a given batch of wafers as each is inserted into the isolation tube 15. The linearizer 24 may include a conventional analog shaping circuit (or a digitizer and lookup table of values determined by such preliminary calibration procedures) to convert voltages at the inputs of the signal processor 23 into corresponding, direct temperature outputs 26 or readings. Such linearization may be employed to overcome the non-linear levels of radiation from the wafer as a function of temperature, for example, as shown in Figure 5.

Therefore, the apparatus and method of the present invention for optically measuring the temperature of a remote object within a hot environment operates within selected wavebands on substantially the ambient radiation alone and on the composite ambient radiation and radiation from the remote object to provide a direct indication of the temperature of the remote object. Changes in emissivity of the remote object may be taken into account by correlating the radiant temperature reading of a sample object with true, contact temperature readings of the object, and the true temperature of all identical objects in a batch may thereafter be optically measured accurately.

## Claims

1.  A method for sensing the temperature of a remote object (17) within a chamber (15) that is heated by a source (14) of radiation within a selected waveband, the source (14) being disposed outside the chamber, and the chamber (15) having a boundary wall that is substantially transparent to radiation within the selected waveband, wherein composite radiation received from the remote object (17) through the boundary wall and from the boundary wall are detected within a different waveband to provide a first indication; **characterized in that** the radiation emitted within said different waveband substantially from the boundary wall alone is detected substantially simultaneously with the composite radiation to provide a second indication; and the first and second indications are processed to provide an output indication that is representative of the elevated temperature of the remote object (17) within the chamber (15) and substantially independent of the radiation from the boundary wall.

2.  The method according to claim 1 characterized in that the region (22) of the boundary wall through which radiation from the remote object (17) is detected has radiation transmissive characteristics that are different from the radiation transmission characteristics of the region of the boundary wall from which the boundary wall radiation is detected.

**3.** The method according to claim 1 or 2 characterized in that the region (22) of the boundary wall includes a radiation transmissive window, in that the composite radiation from the remote object (17) is detected through the window (22), and in that the boundary-wall radiation is detected from another region of the boundary wall separated from the window.

**4.** The method according to claim 1 or 2 characterized in that the chamber (15) has a boundary wall including quartz that is substantially transparent to radiation within the selected waveband, and in that the composite radiation from the remote object (17) through the boundary wall and from the boundary wall is measured within the different waveband through a thickness of quartz in the boundary wall that is substantially thinner than the quartz in the boundary wall from which the boundary-wall radiation is detected.

**5.** The method according to claim 3 characterized in that the boundary wall includes quartz and the radiation transmissive window (22) includes sapphire through which the composite radiation from the remote object (17) is detected.

**6.** The method according to claim 4 characterized in that the composite radiation and the boundary-wall radiation are measured substantially within the selected waveband between approximately 4.3 $\mu$m and 4.7 $\mu$m.

**7.** Apparatus for sensing the temperature of a remote object (17) within a heated chamber (15), wherein the chamber (15) has a boundary wall of a material that transmits radiation within a selected waveband; first radiation detector (10) is disposed external to said chamber (15) and is responsive to radiation within a first field of view; a window (22) of radiation transmissive material is disposed in the boundary wall oriented within the field of view of the first radiation detector (10); and heating means (14) are disposed about said chamber (15) for radiantly heating the remote object (17) within the chamber (15) through the boundary wall with radiation within the selected waveband; **characterized in that** the window (22) is having a sectional dimension which is thinner than the sectional dimension of the boundary wall; in that there is a second radiation detector (12) disposed external to said chamber (15) responsive to radiation within a second field of view, one (10) of the radiation detectors being responsive to radiation that emanates from the object (17) within the respective field of view through the window (22) and which radiation is within a first waveband which is substantially separated from the selected waveband for generating an output signal, and the other (12) of the radiation detectors being responsive to radiation within the first waveband that emanates from the boundary wall for generating an output signal; the heating means is positioned substantially out of the field of view of the radiation detectors (10, 12); and in that a circuit (23-26) receives the output signals from the radiation detectors (10, 12) for producing therefrom an output that is representative of the elevated temperature of the remote object (17) within the chamber (15).

**8.** Apparatus according to claim 7 characterized in that the radiation detectors (10,12) each include a housing (20) disposed thereabout and in that an aperture (11) is positioned in a side of the housing for limiting the field of view of each radiation detector substantially to alignment with the remote object (17) within the chamber (15), with the field of view of only one (10) of the radiation detectors being aligned with the window (22).

**9.** Apparatus according to claim 8 characterized in that the boundary wall of the chamber (15) includes quartz, and in that radiation filters are disposed within the fields of view of the radiation detectors (10,12) for transmitting therethrough substantially only radiation within the waveband from approximately 4.3 $\mu$m to approximately 4.7 $\mu$m.

**Patentansprüche**

**1.** Verfahren zum Erfassen der Temperatur eines entfernten Objekts (17) in einer Kammer (15), welche von einer Quelle (14) einer Strahlung in einem ausgewählten Wellenlängenbereich geheizt wird, wobei die Quelle (14) außerhalb der Kammer angeordnet ist und die Kammer (15) eine Grenzwand besitzt, welche im wesentlichen für Strahlung in dem gewählten Wellenlängenbereich durchlässig ist, bei welchem gemischte Strahlung, die von dem entfernten Objekt (17) durch die Grenzwand und von der Grenzwand empfangen wird, in einem unterschiedlichen Wellenlängenbereich detektiert wird, um ein erstes Anzeichen zu liefern, dadurch gekennzeichnet, daß die Strahlung, welche in dem unterschiedlichen Wellenlängenbereich im wesentlichen von der Grenzwand allein emittiert wird, im wesentlichen gleichzeitig mit der gemischten Strahlung detektiert wird, um ein zweites Anzeichen zu liefern, und daß das erste und zweite Anzeichen verarbeitet werden, um ein Ausgabeanzeichen zu liefern, welches repräsentativ für die erhöhte Temperatur des entfernten Objekts (17) in der Kammer (15) und im wesentlichen unabhängig von der Strahlung der Grenzwand ist.

2. Verfahren nach Anspruch 1, dadurch gekennzeichnet, daß der Bereich (22) der Grenzwand, durch den Strahlung von dem entfernten Objekt (17) detektiert wird, eine Strahlungsdurchlaßcharakteristik aufweist, die verschieden von der Strahlungsdurchlaßcharakteristik des Bereichs der Grenzwand ist, bei dem die Strahlung der Grenzwand detektiert wird.

3. Verfahren nach Anspruch 1 oder 2, dadurch gekennzeichnet, daß der Bereich (22) der Grenzwand ein strahlungsdurchlässiges Fenster enthält, daß die gemischte Strahlung von dem entfernten Objekt (17) durch das Fenster (22) detektiert wird und daß die Strahlung der Grenzwand in einem anderen Bereich der Grenzwand, der von dem Fenster getrennt ist, detektiert wird.

4. Verfahren nach Anspruch 1 oder 2, dadurch gekennzeichnet, daß die Kammer (15) eine Grenzwand aufweist, welche Quarz enthält und welche im wesentlichen durchlässig für Strahlung innerhalb des gewählten Wellenlängenbereichs ist, und daß die gemischte Strahlung von dem entfernten Objekt (17) durch die Grenzwand hindurch und von der Grenzwand in dem unterschiedlichen Wellenlängenbereich durch eine Quarzdicke in der Grenzwand hindurch gemessen wird, welche wesentlich dünner als der Quarz in der Grenzwand ist, in dem die Strahlung der Grenzwand detektiert wird.

5. Verfahren nach Anspruch 3, dadurch gekennzeichnet, daß die Grenzwand Quarz enthält und daß das strahlungsdurchlässige Fenster (22) Saphir enthält, durch welchen die gemischte Strahlung von dem entfernten Objekt (17) detektiert wird.

6. Verfahren nach Anspruch 4, dadurch gekennzeichnet, daß die gemischte Strahlung und die Strahlung der Grenzwand im wesentlichen in dem gewählten Wellenlängenbereich zwischen ungefähr 4,3 $\mu$m und 4,7 $\mu$m gemessen werden.

7. Vorrichtung zum Erfassen der Temperatur eines entfernten Objekts (17) in einer geheizten Kammer (17), bei der die Kammer (15) eine Grenzwand aus einem Material besitzt, welches Strahlung innerhalb eines gewählten Wellenlängenbereichs durchläßt, ein erster Strahlungsdetektor (10) außerhalb der Kammer (15) angeordnet ist und auf Strahlung in einem ersten Sichtfeld anspricht, ein Fenster (22) aus einem strahlungsdurchlässigen Material in der Grenzwand angeordnet ist, die innerhalb des Sichtfeldes des ersten Strahlungsdetektors (10) orientiert ist, und eine Heizeinrichtung (14) um die Kammer (15) herum zum Strahlungsheizen des entfernten Objekts (17) in der Kammer (15) durch die Grenzwand hindurch mit Strahlung innerhalb des gewählten Wellenlängenbereichs angeordnet ist, dadurch gekennzeichnet, daß das Fenster (22) eine Querschnittsabmessung aufweist, welche dünner als die Querschnittsabmessung der Grenzwand ist, daß ein zweiter Strahlungsdetektor (12) vorhanden ist, der außerhalb der Kammer (15) angeordnet ist und auf Strahlung in einem zweiten Sichtfeld anspricht, wobei einer (10) der Strahlungsdetektoren auf Strahlung anspricht, welche von dem Objekt (17) in dem entsprechenden Sichtfeld durch das Fenster (22) hindurch ausgestrahlt wird und welche innerhalb eines ersten Wellenlängenbereichs liegt, der im wesentlichen getrennt von dem gewählten Wellenlängenbereich ist, um ein Ausgangssignal zu erzeugen, und der andere (12) Strahlungsdetektor auf Strahlung in dem ersten Wellenlängenbereich anspricht, welche von der Grenzwand ausgeht, um ein Ausgangssignal zu erzeugen, die Heizeinrichtung im wesentlichen außerhalb des Sichtfelds der Strahlungsdetektoren (10, 12) angeordnet ist und daß eine Schaltung (23 - 26) die Ausgangssignale von den Strahlungsdetektoren (10, 12) empfängt, um daraus eine Ausgabe zu erzeugen, welche repräsentativ für die erhöhte Temperatur des entfernten Objekts (17) in der Kammer (15) ist.

8. Vorrichtung nach Anspruch 7, dadurch gekennzeichnet, daß die Strahlungsdetektoren (10, 12) jeweils ein Gehäuse (20) aufweisen, das um sie herum angeordnet ist, und daß eine Öffnung (11) in einer Seite des Gehäuses angeordnet ist, um das Sichtfeld jedes Strahlungsdetektors im wesentlichen auf eine Ausrichtung mit dem entfernten Objekt (17) in der Kammer (15) zu begrenzen, wobei das Sichtfeld nur eines (10) der Strahlungsdetektoren mit dem Fenster (22) ausgerichtet ist.

9. Vorrichtung nach Anspruch 8, dadurch gekennzeichnet, daß die Grenzwand der Kammer (15) Quarz enthält und daß Strahlungsfilter innerhalb der Sichtfelder der Strahlungsdetektoren (10, 12) angeordnet sind, um durch diese im wesentlichen nur Strahlung innerhalb des Wellenlängenbereichs von ungefähr 4,3μm bis ungefähr 4,7μm durchzulassen.

**Revendications**

1. Procédé de détection de la température d'un objet éloigné (17) dans une enceinte (15) chauffée par une source de rayonnement (14) dans une plage de longueurs d'onde choisie, la source (14) étant disposée à l'extérieur de l'enceinte, et l'enceinte (15) ayant une paroi sensiblement transparente au rayonnement à l'intérieur de la plage de longueurs d'onde choisie, dans lequel le rayonnement composite reçu à partir de l'objet éloigné (17) à travers la paroi et à partir de la paroi est détecté dans une plage de longueurs d'onde distincte pour fournir une première indication ; caractérisé en ce que le rayonnement émis dans ladite plage de longueurs d'onde distincte sensiblement à partir de la paroi seule est détecté sensiblement simultanément avec le rayonnement composite pour fournir une seconde indication ; et les première et seconde indications sont traitées pour fournir une indication de sortie représentative de la température élevée de l'objet éloigné (17) dans l'enceinte (15) et de façon sensiblement indépendante du rayonnement de la paroi.

2. Procédé selon la revendication 1, caractérisé en ce que la région (22) de la paroi à travers laquelle le rayonnement en provenance de l'objet éloigné (17) est détecté a des caractéristiques de transmission de rayonnement distinctes des caractéristiques de transmission de rayonnement de la région de paroi à partir de laquelle le rayonnement de paroi est détecté.

3. Procédé selon la revendication 1 ou 2, caractérisé en ce que la région (22) de la paroi comprend une fenêtre transmettant le rayonnement, en ce que le rayonnement composite en provenance de l'objet éloigné (17) est détecté à travers la fenêtre (22) et en ce que le rayonnement de paroi est détecté à partir d'une autre région de la paroi distincte de la fenêtre.

4. Procédé selon la revendication 1 ou 2, caractérisé en ce que l'enceinte (15) a une paroi qui comprend du quartz qui est sensiblement transparent au rayonnement dans la plage de longueurs d'onde choisie, et en ce que le rayonnement composite en provenance de l'objet éloigné (17) à travers la paroi et en provenance de la paroi est mesuré dans ladite plage de longueurs d'onde distincte à travers une épaisseur de quartz dans la paroi qui est sensiblement plus faible que le quartz dans la paroi à partir duquel le rayonnement de paroi est détecté

5. Procédé selon la revendication 3, caractérisé en ce que la paroi comprend du quartz et la fenêtre transmettant le rayonnement (22) comprend du saphir à travers lequel le rayonnement composite en provenance de l'objet éloigné (17) est détecté.

6. Procédé selon la revendication 4, caractérisé en ce que le rayonnement composite et le rayonnement de paroi sont mesurés sensiblement dans la plage de longueurs d'onde choisie entre approximativement 4,3 et 4,7 micromètres.

7. Appareil de détection de la température d'un objet éloigné (17) dans une enceinte chauffée (15), dans lequel l'enceinte (15) comprend une paroi en un matériau qui transmet le rayonnement à l'intérieur d'une plage de longueurs d'onde choisie ; un premier détecteur de rayonnement (10) est disposé à l'extérieur de l'enceinte (15) et est sensible au rayonnement dans un premier champ de visée ; une fenêtre de rayonnement (22) en un matériau transmettant le rayonnement est disposée dans la paroi orientée selon le champ de visée du premier détecteur de rayonnement (10) ; et des moyens de chauffage (14) sont disposés autour de l'enceinte (15) pour chauffer par rayonnement l'objet éloigné (17) dans l'enceinte (15) à travers la paroi, le rayonnement se trouvant à l'intérieur de la plage de longueurs d'onde choisie ;
caractérisé en ce que la fenêtre (22) a une faible dimension en coupe et est plus mince que la dimension en coupe de la paroi ; en ce qu'un second détecteur de rayonnement (12) est disposé à l'extérieur de l'enceinte (15) et répond au rayonnement dans un second champ de visée, l'un (10) des détecteurs de rayonnement étant sensible au rayonnement qui provient de l'objet (17) dans le champ de visée respectif à travers la fenêtre (22) et le rayonnement se trouvant dans une première plage de longueurs d'onde qui est sensiblement distincte de la plage de longueurs d'onde choisie pour produire un signal de sortie, et l'autre (12) des détecteurs de rayonnement étant sensible à un rayonnement dans la première plage de longueurs d'onde qui provient de la paroi pour produire un signal de sortie ; en ce que les moyens de chauffage sont disposés sensiblement à l'extérieur du champ de visée des détecteurs de rayonnement (10, 12) ; et en ce qu'un circuit (23, 26) reçoit les signaux de sortie en provenance des détecteurs de rayonnement (10, 12) pour produire à partir de là une sortie représentative de la température élevée de l'objet éloigné (17) dans l'enceinte (15).

8. Appareil selon la revendication 7, caractérisé en ce que les détecteurs de rayonnement (10, 12) comprennent chacun un boîtier (20) qui les entoure et en ce qu'une ouverture (11) est placée d'un côté du boitier pour limiter le champ de visée de chaque détecteur de rayonnement sensiblement en alignement avec l'objet éloigné (17) dans l'enceinte (15), le champ de visée d'un seul (10) des détecteurs de rayonnement étant aligné avec la fenêtre (22).

9. Appareil selon la revendication 8, caractérisé en ce que la paroi de l'enceinte (15) comprend du quartz et en ce que des filtres de rayonnement sont disposés dans les champs de visée des détecteurs de rayonnement (10, 12) pour transmettre au travers sensiblement un seul rayonnement dans une plage de longueurs d'onde d'approximativement 4,3 micromètres à approximativement 4,7 micromètres.

*Figure 1*

EXAMPLE: 1000°C WAFER ⟶ 1000mV

*Figure 2*

Figure 3

TYPICAL SPECTRAL ENERGY FLUXES INCIDENT ON PYROMETER 10 BELOW THE WINDOW, FROM LAMP FILAMENTS, A 900°C SI WAFER, AND QUARTZ TUBE AT 400°C.
UNITS: WATTS/$\mu$m/cm$^2$/STERADIAN.

Figure 4

SILICON WAFER→

RADIATION
INCIDENT
ON WAFER
PYROMETER

UNITS:
$W/\mu m/cm^2/$ STERADIAN

←QUARTZ TUBE

←WINDOW

DEGREES C

SPECTRAL RADIANCE AT $4.5\mu m$ FROM SILICON AND QUARTZ

UNITS: $WATTS/\mu m/cm^2/STERADIAN$

RADIATION FLUXES INCIDENT ON WAFER PYROMETER FROM
(1) SILICON WAFER
(2) QUARTZ ISOLATION TUBE
(3) QUARTZ WINDOW

Figure 5

TC-CONTROL 20 SECOND CYCLES
T-WAFER CONSTANT - 625°C

(a)

V1 100mV FULL SCALE

V2 50mV FULL SCALE

10 Sec.

T I M E

(b) V1 (mV)

V1 = 0.212 × V2 + 60.656

V2 (mV)

Figure 6

13